# EUROPÄISCHE PATENTSCHRIFT

(11) **EP 3 699 491 B1**
(45) Veröffentlichungstag und Bekanntmachung des Hinweises auf die Patenterteilung: **18.08.2021**
(21) Anmeldenummer: 20154604.1
(22) Anmeldetag: 13.03.2017
(51) Int. Cl.: F23J 1/02

(54) **VERBRENNUNGSANLAGE MIT ZUMINDEST EINEM STÖRKÖRPERENTFERNUNGSMITTEL IN DER FÖRDERSTRECKE DER VERBRENNUNGSRÜCKSTÄNDE**
COMBUSTION SYSTEM WITH AT LEAST ONE FOREIGN BODY REMOVING AGENT IN THE CONVEYING PATH OF THE COMBUSTION RESIDUES
INSTALLATION DE COMBUSTION DOTÉE D'AU MOINS UN MOYEN D'ÉLIMINATION DES CORPS PERTURBATEURS DANS LE TRAJET DE TRANSPORT DES RÉSIDUS DE COMBUSTION

(30) Priorität: 06.04.2016 DE 102016106277
(43) Veröffentlichungstag der Anmeldung: 26.08.2020
(62) Teilanmeldung aus: 17710254.8
(73) Patentinhaber: Clyde Bergemann Drycon GmbH, 46485 Wesel (DE)
(72) Erfinder: Moreno Rueda, Rafael, 46519 Alpen (DE)
(74) Vertreter: karo IP

(56) Entgegenhaltungen:
- DE-T2- 69 613 553
- GB-A- 2 016 952
- US-A1- 2013 233 951

## Beschreibung

Die vorliegende Erfindung betrifft eine Verbrennungsanlage, insbesondere nach Art eines Kohlekraftwerks, eines Biomasseheizkraftwerks oder einer Abfallverbrennungsanlage. Solche Verbrennungsanlagen dienen insbesondere der Energieerzeugung, Wärmeerzeugung und/oder Abfallbeseitigung.

Bei Verbrennungsanlagen werden in einem Brennraum regelmäßig Brennstoffe, wie zum Beispiel Kohle, Biomasse und/oder Abfälle, verbrannt, deren Verbrennungsrückstände aus dem Brennraum der Verbrennungsanlage entfernt werden müssen. Hierzu weisen die Brennräume regelmäßig zumindest einen Auslass für die Verbrennungsrückstände auf, durch den die Verbrennungsrückstände einem Brecher zum Zerkleinern der Verbrennungsrückstände und einem Förderer zum Abtransport der Verbrennungsrückstände zugeführt werden.

Mit den Verbrennungsrückständen können aus dem Brennraum Störkörper mitgeführt werden, bei denen es sich beispielsweise um sehr große Klumpen der Verbrennungsrückstände und/oder große Metallteile handeln kann, die durch die Brecher nicht zerkleinerbar sind beziehungsweise nicht ausreichend zerkleinert wurden und zu einer Blockierung einer Förderstrecke der Verbrennungsrückstände oder des Förderers führen können. Diese Störkörper können durch ein dem Brecher nachfolgendes Gitter zurückgehalten und nach einer Abschaltung beziehungsweise nach einem Herunterfahren der Verbrennungsanlage entfernt werden, was gegebenenfalls erst nach einer mehrtägigen Abkühlphase der Verbrennungsanlage möglich ist. Ähnliches gilt für den Fall, dass Störkörper in Form von metallischen Körpern (zum Beispiel zerstörte und/oder verlorene Bestandteile von Komponenten der Verbrennungsanlage) auf dem Gitter der Brecher liegenbleiben. Diese können durch den Brecher nicht gebrochen werden und stören dadurch die Funktion des Brechers, solange der Störkörper nicht entfernt wird.

US 2013 233 951 A1 offenbart eine Verbrennungsanlage für ein Krematorium, bei der Metallrückstände in einer Verbrennungsasche mit Hilfe einer Klappe einer Förderstrecke abscheidbar sind.

GB 2 016 952 A offenbart eine Mahlvorrichtung für einen Rostkühler zur Kühlung von z. B. Zementklinker, wobei die Mahlvorrichtung einen Walzenbrecher mit mindestens zwei Brechwalzen umfasst, die an einem Ende eines Kühlrostes unterhalb einer Siebbaugruppe angeordnet sind.

DE 69 613 553 T2 offenbart eine Vorrichtung zur Nachbehandlung von Verbrennungsrückständen aus einem Abfallschmelzofen, wobei die Vorrichtung einen Magnetabscheider zum Abscheiden magnetischer Bestandteile der Verbrennungsrückstände und ein Sieb zum Aussieben nichtmagnetischer Bestandteile der Verbrennungsrückstände aufweist.

Aufgabe der Erfindung ist daher, die mit Bezug auf den Stand der Technik geschilderten Probleme zumindest teilweise zu lösen und insbesondere eine Verbrennungsanlage anzugeben, bei der Störkörper während des Betriebs der Verbrennungsanlage leicht entfernbar sind.

Diese Aufgaben werden gelöst mit einer Verbrennungsanlage gemäß den Merkmalen des unabhängigen Patentanspruchs. Weitere vorteilhafte Ausgestaltungen der Verbrennungsanlage sind in den abhängigen Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Verbrennungsanlage weist einen Brennraum zum Verbrennen eines Brennstoffs auf, wobei Verbrennungsrückstände des in dem Brennraum verbrannten Brennstoffs über einen Auslass des Brennraums einem Brecher zum Zerkleinern der Verbrennungsrückstände zuführbar sind und wobei in einer Förderstrecke der Verbrennungsrückstände zumindest ein Störkörperentfernungsmittel angeordnet ist, mittels dem in den Verbrennungsrückständen mitgeführte und durch den Brecher nicht zerkleinerbare Störkörper über eine Störkörperentnahmeöffnung aus der Förderstrecke entfernbar sind, wobei das zumindest eine Störkörperentfernungsmittel ein in der Förderstrecke der Verbrennungsrückstände zumindest teilweise angeordnetes erstes Gitter umfasst und wobei die Störkörper mittels des ersten Gitters von den Verbrennungsrückständen trennbar sind und wobei das erste Gitter zum Entfernen der Störkörper zumindest teilweise kippbar oder durch die Störkörperentnahmeöffnung verfahrbar ist.

Bei der hier vorgeschlagenen Verbrennungsanlage handelt es sich insbesondere um eine technische Anlage zur Stromerzeugung, Wärmeerzeugung und/oder Abfallbeseitigung. Die Verbrennungsanlage weist einen Brennraum zum Verbrennen eines Brennstoffs auf, bei dem es sich insbesondere um Kohle, Biomasse und/oder Abfälle handelt. Die Verbrennungsrückstände, insbesondere nach Art von Asche und/oder Schlacke, des in dem Brennraum verbrannten Brennstoffs sind über zumindest einen Auslass des Brennraums einem Brecher zum Zerkleinern der Verbrennungsrückstände zuführbar. Der Auslass des Brennraums ist insbesondere nach Art eine Öffnung und/oder eines Schachts am Boden des Brennraums ausgebildet.

Bei dem Brecher kann es sich beispielsweise um einen sogenannten Backenbrecher handeln. Der Brecher ist bevorzugt unter dem Brennraum der Verbrennungsanlage angeordnet. Durch den Brecher sind die Verbrennungsrückstände insbesondere derart zerkleinerbar, dass die zerkleinerten Verbrennungsrückstände anschließend mittels eines Förderers sicher abtransportiert werden können. Alternativ oder zusätzlich kann der Brecher dem Förderer auch nachgeschaltet sein. Der Förderer kann hierzu zumindest ein (umlaufendes) Förderband umfassen, das beispielsweise nach Art eines Plattenförderers ausgebildet ist. Das Förderband ist dabei insbesondere derart ausgebildet, dass es den hohen Temperaturen der Verbrennungsrückstände von beispielsweise 800 °C (Celsius) bis 1.300 °C widerstehen kann. Zu diesem Zweck ist das Förderband bevorzugt zumindest teilweise aus Metall ausgebildet. Alternativ kann der Förderer auch als Schneckenförderer ausgebildet sein. Neben dem Abtransport der Verbrennungsrückstände kann der Förderer auch zur Kühlung und/oder zur Verfestigung der Verbrennungsrückstände dienen. Weiterhin handelt es sich bei dem Förderer insbesondere um einen sogenannten Trockenförderer, der eine Kühlung und/oder Verfestigung der heißen Verbrennungsrückstände ohne ein Abschrecken der Verbrennungsrückstände mit Wasser ermöglicht. Alternativ kann es sich bei dem Förderer aber auch um einen sogenannten Nassförderer handeln.

In einer Förderstrecke der Verbrennungsrückstände von dem Brennraum zu dem Brecher oder Förderer ist zumindest ein Störkörperentfernungsmittel angeordnet, mittels dem in den Verbrennungsrückständen mitgeführte und durch den Brecher nicht zerkleinerbare Störkörper über eine Störkörperentnahmeöffnung entfernbar sind. Bei der Förderstrecke handelt es sich insbesondere um einen Bereich bzw. Pfad, entlang dessen die Verbrennungsrückstände gefördert werden. Die Förderstrecke ist zumindest teilweise (aus Sicherheitsgründen zumeist vollständig) durch Wände verschlossen bzw. umgeben und/oder nach Art einer Schurre, eines Schachts, eines Trichters oder einer Rutsche ausgebildet. Die Verbrennungsrückstände werden entlang der Förderstrecke insbesondere (auch) mittels Schwerkraft transportiert.

Bei den Störkörpern handelt es sich insbesondere um großvolumige (harte) Klumpen der Verbrennungsrückstände, die für eine Zerkleinerung durch den Brecher zu groß sind, und/oder um (große) Metallkörper, wie zum Beispiel in den Brennraum gefallene Lanzenrohre einer Reinigungsvorrichtung der Verbrennungsanlage. Die Störkörper können in zumindest einer Richtung insbesondere zumindest eine Erstreckung von mehr als 200 mm (Millimeter) oder sogar mehr als 400 mm aufweisen. Somit sind die Störkörper zu hart und/oder zu groß für eine Zerkleinerung durch den Brecher. Klarzustellen ist, dass es sich bei den Störkörpern somit insbesondere nicht um gasförmige Schadstoffe und/oder Stäube handelt, die den Brecher ohne weiteres passieren könnten.

Die Störkörper sind mittels des zumindest einen Störkörperentfernungsmittels, das an einer Position entlang der Förderstrecke in der Förderstrecke und/oder an der Förderstrecke der Verbrennungsrückstände angeordnet ist, über die Störkörperentnahmeöffnung aus der Förderstrecke der Verbrennungsrückstände entfernbar. Somit sind die Störkörper durch das zumindest eine Störkörperentfernungsmittel von den übrigen Verbrennungsrückständen trennbar, sodass die Störkörper und die Verbrennungsrückstände nachfolgend getrennt voneinander förderbar und/oder behandelbar sind.

Bei der Störkörperentnahmeöffnung handelt es sich insbesondere um eine (verschließbare und/oder zumindest teilweise blockierbare) Öffnung in einer die Förderstrecke zumindest teilweise umgebenden Wand, oder um eine Öffnung in dem Brecher, durch die die Störkörper getrennt von den Verbrennungsrückständen aus dem Brecher entfernbar sind. Die Störkörperentnahmeöffnung kann hierzu einen Durchmesser von mindestens 400 mm aufweisen. Die Störkörper werden daher nicht durch den Brecher zerkleinert und nicht durch den nachfolgenden Förderer abtransportiert, sondern separat von den übrigen Verbrennungsrückständen abtransportiert und/oder behandelt. Durch das zumindest eine Störkörperentfernungsmittel und die Störkörperentnahmeöffnung können die Störkörper daher während des normalen Betriebs der Verbrennungsanlage ("online") entfernt werden. Stillstände der Verbrennungsanlage, die zu hohen Kosten führen, können dadurch vermieden werden.

Das zumindest eine Störkörperentfernungsmittel umfasst ein in der Förderstrecke der Verbrennungsrückstände zumindest teilweise angeordnetes erstes Gitter, wobei die Störkörper mittels des ersten Gitters von den Verbrennungsrückständen trennbar sind. Das erste Gitter kann insbesondere nach Art eines Siebs ausgebildet sein und/oder eine Vielzahl von Gitteröffnungen aufweisen, die beispielsweise einen Durchmesser von 100 mm bis 800 mm (Millimeter), bevorzugt 100 mm bis 400 mm oder besonders bevorzugt 100 mm bis 200 mm haben. Für das erste Gitter können in und/oder an der Förderstrecke beziehungsweise an einer Wand der Förderstrecke Stützelemente und/oder Befestigungselemente vorgesehen sein. Optional kann das erste Gitter mittels der Stützelemente und/oder Befestigungselemente, insbesondere parallel zu einer Ausdehnungsebene des ersten Gitters beziehungsweise in einer horizontalen Richtung, bewegbar sein. Dieses erste Gitter hat insbesondere die Funktion, die Störkörper in einer vorgegebene Position zu dem Störkörperentfernungsmittel und/oder der Störkörperentnahmeöffnung in der Förderstrecke zurückzuhalten, während die Verbrennungsrückstände weiter transportiert werden können.

Das erste Gitter zum Entfernen der Störkörper ist zumindest teilweise kippbar oder durch die Störkörperentnahmeöffnung aus der Förderstrecke der Verbrennungsrückstände verfahrbar. Weiterhin ist das erste Gitter in der Förderstrecke somit insbesondere nach Art einer Schublade ausgebildet. Hierdurch können die Störkörper außerhalb der Förderstrecke der Verbrennungsrückstände, das heißt in einem Bereich der Verbrennungsanlage, in dem Temperaturen von weniger als 60 °C herrschen und/oder der durch Personen während des normalen Betriebs der Verbrennungsanlage zugänglich ist, von dem ersten Gitter entfernt werden. Das erste Gitter kann den Querschnitt der Förderstrecke vollständig überspannen. Es ist möglich, dass das erste Gitter deutlich größer als der Querschnitt der Förderstrecke ausgeführt ist, so dass dieses auch im Zustand, wenn es (teilweise) herausgefahren wird, gleichzeitig noch (zumindest teilweise) den Querschnitt der Förderstrecke überdeckt. Im Falle eines kippbaren (bzw. verschwenkbaren) ersten Gitters können die Störkörper auf dem ersten Gitter insbesondere in Richtung der Störkörperentnahmeöffnung und/oder durch die Störkörperentnahmeöffnung rutschen. Das erste Gitter kippt/verschwenkt insbesondere aus einer horizontalen Lage in eine nach unten geneigte Lage, so dass sich auf dem ersten Gitter befindliche Störkörper (ggf. aufgrund der Schwerkraft zumindest teilweise selbstständig) hin zur Störkörperentnahmeöffnung bewegen können.

Weiterhin ist es vorteilhaft, wenn der Brecher zumindest ein zweites Gitter aufweist, durch das die Störkörper von den Verbrennungsrückständen trennbar sind. Das zumindest eine zweite Gitter ist insbesondere an einem Boden eines Raums angeordnet, der zwischen dem ersten Brechelement und dem zweiten Brechelement ausgebildet ist, und/oder ist der Fachwelt auch als sogenanntes "GRID" bekannt. Das zumindest eine zweite Gitter kann insbesondere ebenfalls nach Art eines Siebs ausgebildet sein und/oder eine Vielzahl von Gitteröffnungen aufweisen, die beispielsweise einen Durchmesser von 100 mm bis 800 mm (Millimeter), bevorzugt 100 mm bis 400 mm oder besonders bevorzugt 100 mm bis 200 mm haben.

Zudem ist es vorteilhaft, wenn entlang der Förderstrecke im Bereich des zumindest einen Störkörperentfernungsmittels zumindest eine Öffnung angeordnet ist. Bei dieser zumindest einen Öffnung kann es sich beispielsweise um eine sogenanntes "Poke Hole" handeln, durch das die Störkörper manuell, beispielsweise mittels eines mechanischen Hilfsmittels, durch die Störkörperentnahmeöffnung bewegt werden können. Über die Poke Holes kann bei Bedarf ein Störköper auch vorgebrochen werden, damit dieser besser durch die Störkörperentnahmeöffnung passt. Hierzu kann durch ein Poke Hole hindurch (zeitweise) ein Brechwerkzeug eingeführt und mit dem auf dem ersten Gitter befindlichen Störkörper in Kontakt gebracht werden. Die zumindest eine Öffnung ist insbesondere maximal 2 Meter von dem zumindest einen Störkörperentfernungsmittel entfernt angeordnet.

Weiterhin ist es vorteilhaft, wenn die Verbrennungsanlage einen mobilen Aufnahmebehälter zur Aufnahme der durch die Störkörperentnahmeöffnung entfernten Störkörper aufweist. Der Aufnahmebehälter kann hierzu beispielsweise Räder aufweisen und/oder mit einem Flurfördergerät, wie zum Beispiel einem Hubwagen oder Gabelstapler, bewegbar sein.

Weiterhin kann mindestens ein Erfassungsmittel vorgesehen sein, mit dem festgestellt werden kann, ob bzw. welche Störkörper aktuell an dem Störkörperentfernungsmittel vorliegen. Es kann ein Erfassungsmittel zur Ermittlung des Gewichts der Störkörper vorgesehen sein. Es kann ein optisches Erfassungsmittel zur visuellen Überwachung der Förderstrecke im Bereich des Störkörperentfernungsmittels vorgesehen sein. Das mindestens eine Erfassungsmittel kann mit einer Steuerung verbunden sein, die ein Signal an einen Leitstand abgeben und/oder den Betrieb des Störkörperentfernungsmittels bzw. der Störkörperentnahmeöffnung initiieren / beenden kann.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Ausführungsvariante der Verbrennungsanlage mit einer geschlossenen Störkörperentnahmeöffnung;
- Fig. 2:: die erste Ausführungsvariante der Verbrennungsanlage mit einer geöffneten Störkörperentnahmeöffnung; und
- Fig. 3:: eine zweite Ausführungsvariante der Verbrennungsanlage mit einer geöffneten Störkörperentnahmeöffnung.

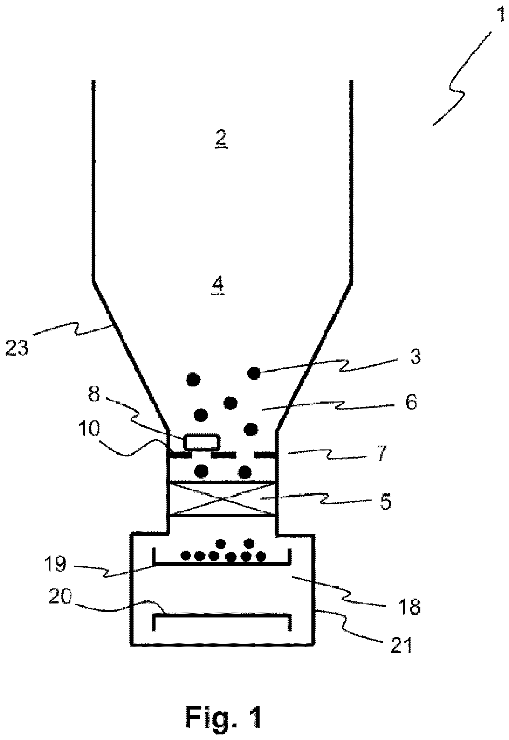

Die Fig. 1 zeigt eine Verbrennungsanlage 1 mit einem Brennraum 2, in dem ein hier nicht gezeigter Brennstoff verbrennbar ist. Die durch die Verbrennung des Brennstoffs in dem Brennraum 2 entstehenden Verbrennungsrückstände 3 sind über einen Auslass 4 des Brennraums 2 entlang einer Förderstrecke 6, einem Brecher 5 und einem Förderer 18 zuführbar. Die Förderung der Verbrennungsrückstände 3 entlang der Förderstrecke 6 erfolgt mit Hilfe der Schwerkraft. Die Verbrennungsrückstände 3 werden durch den Brecher 5 zerkleinert und anschließend durch den Förderer 18 abtransportiert. Der Förderer 18 weist ein umlaufendes Förderband mit einem Obertrum 19 und einem Untertrum 20 auf. Der Förderer ist zumindest teilweise durch ein Gehäuse 21 umgeben und insbesondere im Wesentlichen gasdicht mit dem Brennraum 2 verbunden. Mit den Verbrennungsrückständen 3 werden Störkörper 8 mitgeführt, die durch den Brecher 5 aufgrund ihrer Härte und/oder Größe nicht zerkleinerbar sind. Die Verbrennungsanlage 1 weist daher ein Störkörperentfernungsmittel 7 auf, das bei der hier gezeigten ersten Ausführungsvariante als erstes Gitter 10 ausgebildet ist, das in der Förderstrecke 6 der Verbrennungsrückstände 3 zwischen dem Auslass 4 des Brennraums 2 und dem Brecher 5 angeordnet ist.

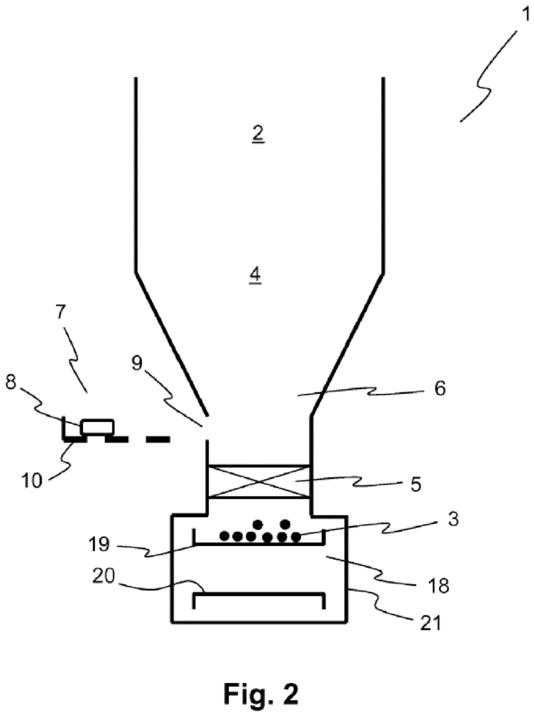

Wie in der Fig. 2 gezeigt, ist das Gitter 10 des Störkörperentfernungsmittels 7 seitlich durch eine Störkörperentnahmeöffnung 9, die in einer die Förderstrecke 6 umgebenden Wand 23 ausgebildet ist, aus der Förderstrecke 6 der Verbrennungsrückstände 3 herausfahrbar. In der herausgefahrenen Position können die durch das erste Gitter 10 aus den Verbrennungsrückständen 3 herausgefilterten Störkörper 8 entfernt werden, ohne dass die Verbrennungsanlage stillgelegt oder heruntergefahren werden muss.

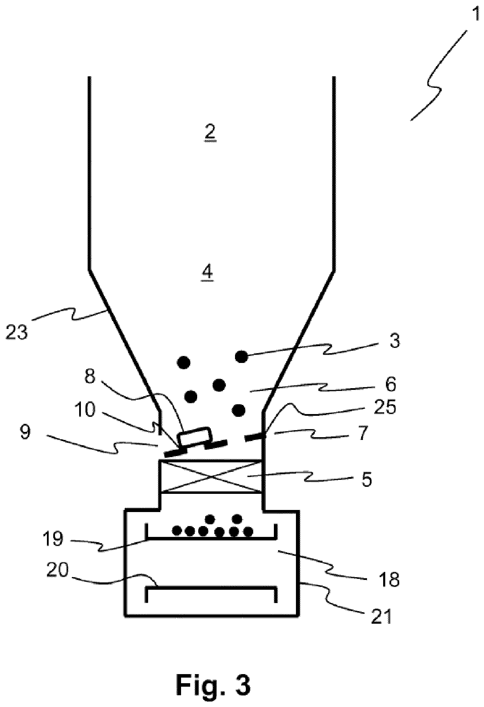

Die Fig. 3 zeigt eine zweite Ausführungsvariante einer Verbrennungsanlage 1, die sich von der ersten Ausführungsvariante der Verbrennungsanlage 1 dadurch unterscheidet, dass das Störkörperentfernungsmittel 7 ein um eine Schwenkachse 25 kippbares oder schwenkbares erstes Gitter 10 aufweist. Hierdurch bildet das erste Gitter 10 eine schiefe Ebene, sodass die Störkörper 8 durch die hier geöffnete Störkörperentnahmeöffnung 9 aus der Förderstrecke 6 rutschen können. Die Störkörperentnahmeöffnung 9 kann durch eine hier nicht gezeigte Klappe verschlossen werden.

Vorsorglich sei darauf hingewiesen, dass die in den Figuren gezeigten Merkmale der Ausführungsvarianten vereinzelt und/oder miteinander kombiniert werden können, soweit dies hier nicht explizit ausgeschlossen wurde. Dies gilt insbesondere hinsichtlich der Merkmale zum ersten Gitter und/oder zum Brecher.

Die vorliegende Erfindung zeichnet sich insbesondere dadurch aus, dass Störkörper im normalen Betrieb einer Verbrennungsanlage entfernt werden können, ohne dass die Verbrennungsanlage stillgelegt werden muss.

### B ezugszei chenli ste

- 1: Verbrennungsanlage
- 2: Brennraum
- 3: Verbrennungsrückstände
- 4: Auslass
- 5: Brecher
- 6: Förderstrecke
- 7: Störkörperentfernungsmittel
- 8: Störkörper
- 9: Störkörperentnahmeöffnung
- 10: erstes Gitter
- 11: erstes Brechelement
- 12: Schieber
- 13: zweites Brechelement
- 14: zweites Gitter
- 15: Öffnung
- 16: Aufnahmebehälter
- 17: Klappe
- 18: Förderer
- 19: Obertrum
- 20: Untertrum
- 21: Gehäuse
- 22: Fallschure
- 23: Wand
- 24: Hydraulikzylinder
- 25: Schwenkachse

## Patentansprüche

1. Verbrennungsanlage (1), aufweisend einen Brennraum (2) zum Verbrennen eines Brennstoffs, wobei Verbrennungsrückstände (3) des in dem Brennraum (2) verbrannten Brennstoffs über einen Auslass (4) des Brennraums (2) einem Brecher (5) zum Zerkleinern der Verbrennungsrückstände (3) zuführbar sind und wobei in einer Förderstrecke (6) der Verbrennungsrückstände (3) zumindest ein Störkörperentfernungsmittel (7) angeordnet ist, mittels dem in den Verbrennungsrückständen (3) mitgeführte und durch den Brecher (5) nicht zerkleinerbare Störkörper (8) über eine Störkörperentnahmeöffnung (9) aus der Förderstrecke (6) entfernbar sind, wobei das zumindest eine Störkörperentfernungsmittel (7) ein in der Förderstrecke (6) der Verbrennungsrückstände (3) zumindest teilweise angeordnetes erstes Gitter (10) umfasst und wobei die Störkörper (8) mittels des ersten Gitters (10) von den Verbrennungsrückständen (3) trennbar sind und wobei das erste Gitter (10) zum Entfernen der Störkörper (8) zumindest teilweise kippbar oder durch die Störkörperentnahmeöffnung (9) verfahrbar ist.

2. Verbrennungsanlage (1) nach dem vorhergehenden Patentanspruch, wobei zumindest in oder an der Förderstrecke (6) oder an einer Wand der Förderstrecke (6) wenigstens Stützelemente oder Befestigungselemente vorgesehen sind, mittels derer das erste Gitter (10) parallel zu einer Ausdehnungsebene des ersten Gitters (10) oder in einer horizontalen Richtung bewegbar ist.

3. Verbrennungsanlage (1) nach einem der vorhergehenden Patentansprüche, wobei das erste Gitter (10) aus einer horizontalen Lage in eine nach unten geneigte Lage kippbar ist, so dass sich auf dem ersten Gitter (10) befindliche Störkörper (8) aufgrund der Schwerkraft zumindest teilweise selbstständig hin zur Störkörperentnahmeöffnung bewegen.

4. Verbrennungsanlage (1) nach einem der vorhergehenden Patentansprüche, wobei das erste Gitter (10) größer als ein Querschnitt der Förderstrecke (6) ausgeführt ist, so dass dieses auch im Zustand, wenn es herausgefahren wird, gleichzeitig noch zumindest teilweise den Querschnitt der Förderstrecke (6) überdeckt.

5. Verbrennungsanlage (1) nach einem der vorhergehenden Patentansprüche, wobei das zumindest eine Störkörperentfernungsmittel (7) einen Schieber (12) umfasst und wobei die Störkörper (8) mit dem Schieber (12) durch die Störkörperentnahmeöffnung (9) entfernbar sind.

6. Verbrennungsanlage (1) nach einem der vorhergehenden Patentansprüche, wobei der Brecher (5) zumindest ein zweites Gitter (14) aufweist, durch das die Störkörper (8) von den Verbrennungsrückständen (3) trennbar sind.

7. Verbrennungsanlage (1) nach einem der vorhergehenden Patentansprüche, wobei entlang der Förderstrecke (6) im Bereich des zumindest einen Störkörperentfernungsmittels (7) zumindest eine Öffnung (15) angeordnet ist.

8. Verbrennungsanlage (1) nach dem vorhergehenden Patentanspruch, wobei die zumindest eine Öffnung (15) maximal 2 Meter von dem zumindest einen Störkörperentfernungsmittel (7) entfernt angeordnet ist und dadurch ein Brechwerkzeug eingeführt und mit dem auf dem ersten Gitter (10) befindlichen Störkörper (8) in Kontakt gebracht werden kann.

9. Verbrennungsanlage (1) nach einem der vorhergehenden Patentansprüche, aufweisend einen mobilen Aufnahmebehälter (16) zur Aufnahme der durch die Störkörperentnahmeöffnung (9) entfernten Störkörper (8).

10. Verbrennungsanlage (1) nach einem der vorhergehenden Patentansprüche, wobei diese als Kohlekraftwerk, Biomasseheizkraftwerk oder Abfallverbrennungsanlage eingerichtet ist.

## Claims

1. Combustion system (1), comprising a combustion chamber (2) for burning a fuel, wherein combustion residues (3) of the fuel burnt in the combustion chamber (2) can be fed via an outlet (4) of the combustion chamber (2) to a crusher (5) for comminuting the combustion residues (3), and wherein at least one impurity removal means (7) is arranged in a conveying path (6) of the combustion residues (3), by means of which impurities (8) entrained in the combustion residues (3) and not crushable by the crusher (5) can be removed from the conveying path (6) via an impurity removal opening (9), wherein the at least one impurity removal means (7) includes a first grid (10) at least partially arranged in the conveying path (6) of the combustion residues (3) and wherein the impurities (8) can be separated from the combustion residues (3) by means of the first grid (10) and wherein the first grid (10) can be at least partially tilted or moved through the impurity removal opening (9) for removing the impurities (8).

2. Combustion system (1) according to the preceding claim, wherein at least in or on the conveying path (6) or on a wall of the conveying path (6) at least supporting elements or fastening elements are provided, by means of which the first grid (10) can be moved parallel to an extension plane of the first grid (10) or in a horizontal direction.

3. Combustion system (1) (1) according to one of the preceding claims, wherein the first grid (10) can be tilted from a horizontal position into a downwardly inclined position, so that impurities (8) located on the first grid (10) move at least partially automatically towards the impurity removal opening due to gravity.

4. Combustion system (1) according to one of the preceding claims, wherein the first grid (10) is made larger than a cross-section of the conveying path (6) so that, even in the state when it is moved out, it still simultaneously at least partially covers the cross-section of the conveying path (6).

5. Combustion system (1) according to one of the preceding claims, wherein the at least one impurity removal means (7) includes a pusher (12) and wherein the impurities (8) are removable with the pusher (12) through the impurity removal opening (9).

6. Combustion system (1) according to one of the preceding claims, wherein the crusher (5) has at least one second grid (14) through which the impurities (8) can be separated from the combustion residues (3).

7. Combustion system (1) according to one of the preceding claims, wherein at least one opening (15) is arranged along the conveying path (6) in the region of the at least one impurity removal means (7).

8. Combustion system (1) according to the preceding claim, wherein said at least one opening (15) is arranged at a maximum distance of 2 metres from said at least one impurity removal means (7), thereby allowing a crushing tool to be inserted and brought into contact with the impurity (8) located on the first grid (10).

9. Combustion system (1) according to one of the preceding claims, having a mobile receiving container (16) for receiving the impurities (8) removed through the impurity removal opening (9).

10. Combustion plant (1) according to one of the preceding claims, wherein said combustion plant (1) is set up as a coal-fired power plant, biomass-fired power plant or waste incineration plant.

## Revendications

1. Installation de combustion (1), comportant une chambre de combustion (2) pour la combustion d'un combustible, les résidus de combustion (3) du combustible brûlé dans la chambre de combustion (2) pouvant être amenés à un broyeur (5) via une sortie (4) de la chambre de combustion (2) pour réduire la taille des résidus de combustion (3) et au moins un moyen d'élimination de corps indésirables (7) étant disposé dans un trajet de transport (6) des résidus de combustion (3), ledit moyen permettant d'écarter du trajet de transport (6) les corps indésirables (8) amenés avec les résidus de combustion (3) et n'ayant pas pu être réduits en taille par le broyeur (5) en les conduisant à travers une ouverture de retrait de corps indésirables (9), l'au moins un moyen d'élimination de corps indésirables (7) comprenant une première grille (10) au moins en partie disposée dans le trajet de transport (6) des résidus de combustion (3) et les corps indésirables (8) pouvant être séparés des résidus de combustion (3) à l'aide de la première grille (10) et la première grille (10) pouvant basculer au moins en partie pour retirer les corps indésirables (8) ou pouvant être amenés à travers l'ouverture de retrait de corps indésirables (9).

2. Installation de combustion (1) selon la revendication précédente, au moins des éléments de maintien ou des éléments de fixation étant prévus au moins dans le trajet de transport (6) ou au niveau de celui-ci ou au niveau d'une paroi du trajet de transport (6), la première grille (10) pouvant être déplacée, grâce auxdits éléments, parallèlement à un plan d'extension de la première grille (10) ou dans une direction horizontale.

3. Installation de combustion (1) selon l'une quelconque des revendications précédentes, la première grille (10) pouvant être basculée d'une position horizontale jusque dans une position inclinée vers le bas, de sorte que les corps perturbateurs (8) se trouvant sur la première grille (10) se déplacent vers l'ouverture de retrait de corps indésirables de façon au moins en partie autonome du fait de la pesanteur.

4. Installation de combustion (1) selon l'une quelconque des revendications précédentes, la première grille (10) étant réalisée de façon à être plus grande qu'une section transversale du trajet de transport (6), de sorte que celle-ci recouvre simultanément encore au moins en partie la section transversale du trajet de transport (6), et ce également dans l'état sorti.

5. Installation de combustion (1) selon l'une quelconque des revendications précédentes, l'au moins un moyen d'élimination de corps perturbateurs (7) comprenant un poussoir (12) et les corps perturbateurs (8) pouvant être retirés à l'aide du poussoir (12), à travers l'ouverture de retrait de corps indésirables (9).

6. Installation de combustion (1) selon l'une quelconque des revendications précédentes, le broyeur (5) comportant au moins une deuxième grille (14) à travers laquelle les corps indésirables (8) peuvent être séparés des résidus de combustion (3).

7. Installation de combustion (1) selon l'une quelconque des revendications précédentes, au moins une ouverture (15) étant disposée le long du trajet de transport (6) dans la région de l'au moins un moyen d'élimination des corps perturbateurs (7).

8. Installation de combustion (1) selon la revendication précédente, l'au moins une ouverture (15) étant disposée de façon à être éloignée de tout au plus 2 mètres de l'au moins un moyen d'élimination des corps perturbateurs (7) et introduisant ainsi un outil de broyage avec lequel les corps perturbateurs (8) se trouvant sur la première grille (10) peuvent être amenés en contact.

9. Installation de combustion (1) selon l'une quelconque des revendications précédentes, comportant un bac récepteur mobile (16) destiné à recevoir les corps perturbateurs (8) retirés de l'ouverture de retrait de corps perturbateurs (9).

10. Installation de combustion (1) selon l'une quelconque des revendications précédentes, celle-ci prenant la forme d'une centrale à charbon, d'une centrale à biomasse ou d'une installation de combustion des déchets.
